# EUROPÄISCHE PATENTSCHRIFT

(11) **EP 2 151 517 B1**
(45) Veröffentlichungstag und Bekanntmachung des Hinweises auf die Patenterteilung: **26.06.2013**
(21) Anmeldenummer: 08162037.9
(22) Anmeldetag: 07.08.2008
(51) Int. Cl.: B29C 70/20, D04H 3/10, D04H 3/12, D04H 3/004, D04H 3/009, D04H 3/11, D04H 3/04, D02J 1/18

(54) **Verfahren zum Herstellen einer unidirektionalen Faserlage und Vorrichtung zum Spreizen von Fasern**
Method for producing a unidirectional fibrous layer and device for spreading fibres
Procédé de fabrication d'une couche de fibre unidirectionnelle et dispositif d'écartement de fibres

(43) Veröffentlichungstag der Anmeldung: 10.02.2010
(73) Patentinhaber: Liba Maschinenfabrik GmbH, 95119 Naila (DE)
(72) Erfinder: Seuss, Rainer, 95197 Schauenstein (DE)
(74) Vertreter: Leske, Thomas

(56) Entgegenhaltungen:
- US-A- 3 953 641
- US-A- 5 214 828

## Beschreibung

Die Erfindung betrifft ein Verfahren zum Herstellen einer unidirektionalen Faserlage in der Form einer endlosen Bahn, die sich auf einer mit konstanter Geschwindigkeit bewegten Transporteinrichtung befindet und sich in ihrer Längsrichtung zusammen mit der Transporteinrichtung bewegt, wobei die Fasern in der Form einzelner Segmente in einer definierten Position nebeneinander abgelegt werden und jedes Segment aus mindestens einer Faser besteht, die ihrerseits aus einer Vielzahl von Filamenten besteht, und wobei die Segmente und Fasern zueinander parallel, aber unter einem Winkel zu der Längsrichtung der entstehenden Faserlage verlaufen, gemäß dem Oberbegriff des Anspruchs 1.

Verfahren dieser Art und zur Durchführung dieser Verfahren geeignete Vorrichtungen sind beispielsweise aus der DE 102 14 140 B4, der EP 0 972 102 B1 und der EP 1 512 784 B1 bekannt.

In dieser Anmeldung wird der Begriff "Faser" gleichbedeutend mit Kabel, Faden, Filamentkabel oder Roving verwendet. Gemeint ist in jedem Fall eine einzelne Faser oder ein Faden, der aus einer Vielzahl von einzelnen Filamenten besteht und als Ausgangsmaterial einen Querschnitt von annähernd Kreis- oder Polygon-Form hat, aber auch schon einen abgeflachten Querschnitt nach Art eines Rechtecks mit abgerundeten Ecken aufweisen kann. Wenn derartige Fasern in Form von sehr dünnen Schichten oder Lagen benötigt werden, so werden diese aus Kostengründen durch Verbreitern oder Spreizen von dicken Kabeln hergestellt, von denen jedes aus 12.000 (K-Zahl 12) oder sehr viel mehr Filamenten besteht. Unter einem "Band" ist im Sinne dieser Anmeldung eine Faser zu verstehen, die in einem gezielten Vorgang verbreitert oder gespreizt worden ist. Schließlich bedeutet die "definierte Position", in der sich die Segmente zueinander befinden sollen, dass diese auf Stoß, auf Lücke oder mit Überlappung verlegt sein können.

Gemäß der DE 102 14 140 B4 wird eine Faserschar von einem endlosen Vorrat bereitgestellt, in abzutrennenden, abgelängten Abschnitten über Förderketten einer Multiaxialmaschine überführt und schließlich in Befestigungseinrichtungen befestigt, die sich an den Förderketten befinden. Dabei hält eine lösbare Halte- und Erfassungseinrichtung das vordere freie Ende der Faserschar so lange fest, bis es über die Förderketten geführt wird. Hierzu dient ein Greifer, der entlang einer Führungsbahn in senkrechter oder schräger Richtung quer zu der Förderrichtung der Förderketten hin und her beweglich gesteuert angetrieben ist. Die Führungsbahn verläuft daher ebenfalls in der Verlegerichtung der Faserschar. Bei gelöster Halte- und Erfassungseinrichtung übernimmt der Greifer das freie Ende der Faserschar und führt es über die Förderketten. Der über den beiden Förderketten befindliche bandförmige Abschnitt der Faserschar wird sodann von einer nicht dargestellten Trenneinrichtung abgetrennt, die sich im Bereich der Halte- und Erfassungseinrichtung befindet, und wird damit zu einem einzelnen Segment. Das neu entstandene freie Ende der endlosen Faserschar ist dann wieder von der Halte- und Erfassungseinrichtung gehalten. Das über den Förderketten befindliche einzelne Segment hingegen wird an seinen beiden Enden von einer Leger-Klemmeinrichtung erfasst, die aus einem besonderen, für sich angetriebenen Wagen von der Ausbildung eines Portals besteht. Dieses Portal befindet sich über den Förderketten und ist parallel zu diesen hin und her beweglich. Zumindest die Klemmelemente der Leger-Klemmeinrichtung, die das abgelängte einzelne Segment halten, sind zudem an dem Wagen in vertikaler Richtung beweglich. Die Leger-Klemmeinrichtung hat einen eigenen Antrieb, und die Bewegungen des Wagens und der an ihm befindlichen Klemmelemente sind in Abstimmung auf die Bewegungen des Greifers und der Förderketten gesteuert. Im Zuge ihrer Hin- und Herbewegung gibt es eine Phase, in der die Leger-Klemmeinrichtung und damit auch das von ihr gehaltene einzelne Segment dieselbe Geschwindigkeit haben wie die Förderketten. Wenn diese Phase erreicht ist, wird das einzelne Segment von der Leger-Klemmeinrichtung an die Befestigungseinrichtungen übergeben, die sich an den Förderketten befinden. Das einzelne Segment ist damit endgültig ein Teil der verlegten unidirektionalen Faserlage geworden. Der Greifer ist währenddessen zurückgefahren und hat einen neuen abzulängenden Abschnitt der Faserschar von dem endlosen Vorrat herantransportiert.

Mit dem Verfahren gemäß der DE 102 14 140 B4 gelingt es, kostengünstige, bandförmig angeordnete Faserscharen wie z.B. auch "heavy tows" zuverlässig zu einem multiaxialen Fadengelege vorzulegen und in dieser Form auch zuverlässig mittels einer Verbindungsstation zuverlässig zu fixieren.

Das Verlegen von dünnen, bandförmigen Faserscharen ist auch Gegenstand der EP 0 972 102 B1. Danach werden die Fasern des Ausgangsmaterials von Vorratsspulen abgezogen, in einem Spreizaggregat verbreitert und in Form der entstandenen flachen Bänder nebeneinander gelegt, so dass eine dünne, flache Lage gebildet wird, die eine Breite von wenigstens gleich 5 cm und eine flächenbezogene Masse von höchstens gleich 300 g/m² aufweisen soll. Diese Lage wird als unidirektionale Lage zum Aufbau des multiaxialen Fadengeleges verwendet, wobei mehrere unidirektionale Faserlagen mit wechselnden Richtungen übereinander abgelegt werden.

Zur besseren Handhabung ist in der EP 0 972 102 B1vorgeschrieben, dass den entstandenen unidirektionalen Lagen durch eine zusätzliche Maßnahme eine Querkohäsion verliehen wird, die sich über die gesamte Breite dieser Lage und damit über alle Bänder erstreckt, aus denen diese Lage gebildet ist. Die Bänder werden somit durch die Querkohäsion zusammengehalten. Die Maßnahmen zum Erteilen der Querkohäsion sind bekannt; erwähnt sei das Mattieren durch einen Druckwasserstrahl, das Nadeln, das Auftragen eines chemischen Bindemittels oder das Aufbringen eines wärmeschmelzbaren Fadens, der in Querrichtung über die unidirektionale Lage gelegt wird.

Gemäß der EP 0 972 102 B1 werden die aus dem Ausgangsmaterial gebildeten und mit Querkohäsion versehenen unidirektionalen Lagen zunächst auf Vorratsspulen aufgewickelt, die später an die Multiaxialmaschinen zum Aufbau der multiaxialen Fadengelege herangebracht werden. Dort werden die Lagen von den Vorratsspulen abgezogen und über eine Transporteinrichtung gebracht, wo sie mittels einer besonderen Verlegeeinrichtung in einzelnen abgelängten Segmenten auf der Transporteinrichtung oder einer schon vorhandenen unidirektionalen Lage abgelegt werden. Zum Ablegen kann die Transporteinrichtung angehalten werden, so dass diese nur intermittierend betrieben werden kann. Die EP 0 972 102 B1 beschreibt aber auch schon eine Möglichkeit, die Segmente bei kontinuierlich bewegter Transporteinrichtung abzulegen. Hierbei werden die Enden des einzelnen, bereits abgelängten Segments mittels Zangen vorübergehend an Blöcken befestigt, die sich zu beiden Seiten der Transporteinrichtung befinden und dort an je einem Endlosförderer befestigt sind. Die Blöcke bewegen sich ein kurzes Stück weit neben der Transporteinrichtung und in deren Richtung, wobei das jeweils gehaltene Segment an die Transporteinrichtung übergeben wird.

Bei dem Verfahren gemäß der EP 0 972 102 B1 wird somit zunächst durch Spreizen der Fasern des Ausgangsmaterials ein verbreitertes Band hergestellt, das als Zwischenprodukt zu mehreren Bändern nebeneinander oder als einzelnes Band auf Vorratsspulen zwischengelagert wird. Dieses Halbfabrikat wird sodann zu der Multiaxialmaschine gebracht und dort wieder abgezogen und in Form von Segmenten zu unidirektionalen Fadenlagen abgelegt. Im Betriebsjargon wird eine derartige Vorgehensweise als "Offline-Spreizen" bezeichnet. Im Gegensatz dazu ist auch schon das so genannte "Online-Spreizen" bekannt, bei dem sich das Spreizaggregat direkt neben der Multiaxialmaschine befindet und im Takt der Verlegeeinrichtung arbeitet.

Gemäß der EP 1 512 784 B1 wird der Verlegevorgang allein mittels eines Greifers ausgeführt, der sich an einem Legewagen befindet. Der Greifer zieht von einer Vorratsspule einen vorderen Abschnitt von Filamentscharen ab und führt diesen direkt über Fixierelemente, die sich an den beiden die Transporteinrichtung bildenden Förderketten befinden. Einlegeprofile drücken die Enden des Filamentscharabschnitts in die Fixierelemente hinein, während die Förderketten sich bewegen.

Aus der DE 10 2005 008 705 B3 geht eine Vorrichtung zum Zuführen von Faserbändern zu einer Wirkmaschine hervor, bei der die Fasern des Ausgangsmaterials auf ihrem Weg von einem Spulengatter zu der Verlegeeinrichtung, also im "Online-Verfahren", verbreitert werden. Die Fasern des Ausgangsmaterials haben bereits die Form von Bändern und werden in der Vorrichtung noch weiter verbreitert. Hierzu werden die Faserbänder des Ausgangsmaterials einzeln von Spulen abgezogen und auf dem Weg vom Spulengatter zur Band-Legeeinrichtung im Abstand voneinander geführt und mittels Erwärmung und Andrückwalzen schrittweise verbreitert. Am Ausgang der Vorrichtung ist ein Heizkanal mit dem endgültigen Spreizaggregat angeordnet.

Schließlich betrifft die ältere, nicht vorveröffentlichte europäische Patentanmeldung der Anmelderin mit der Nummer 07 011 718.9 ein Verfahren zum Aufbringen einer unidirektionalen Faserlage sowie auch eine entsprechende Einrichtung und eine Multiaxialmaschine, bei denen das Spulengatter zusammen mit dem Spreizaggregat als eine gemeinsame bauliche Einheit in der Weise gesteuert bewegt wird, dass der Abstand zwischen der gemeinsamen baulichen Einheit und der Verlegeeinrichtung gezielt verändert wird; dabei erfolgt die Bewegung der gemeinsamen baulichen Einheit nach Maßgabe des in der Zeiteinheit wechselnden Bedarfs der Verlegeeinrichtung an Faserschar. Mit diesem älteren Vorschlag wird erreicht, dass die Fasern des Ausgangsmaterials nicht nur mit konstanter Geschwindigkeit von den Vorratsspulen abgezogen werden, sondern auch mit konstanter Geschwindigkeit das Spreizaggregat durchlaufen, was dann auch für die verbreiterten Bänder gilt. Der Vorschlag gemäß der Anmeldung 07 011 718.9 ist ein weiterer Beitrag zu dem stets bestehenden Ziel, die unidirektionalen Faserlagen möglichst gleichmäßig zu verlegen und damit ein multiaxiales Fadengelege mit einem homogenen Aufbau zu schaffen.

Die Ablage der Segmente hat stets in einer definierten Position zueinander erfolgen, das heißt, sie müssen stets parallel zueinander abgelegt werden, wobei ein Verlegen "auf Stoß", also unmittelbar nebeneinander, auf Lücke oder mit teilweiser Überlappung sinnvoll sein kann. Die Anmelderin hat festgestellt, dass ein inhomogener Aufbau des fertigen multiaxialen Fadengeleges auch dadurch verursacht sein kann, dass die angestrebte definierte Position bei der Ablage der einzelnen multiaxialen Faserlagen nicht zustande gekommen ist. Zwar lässt sich eine große Genauigkeit in der Arbeitsweise der Verlegeeinrichtungen erzielen, mit denen die Segmente auf der Transporteinrichtung oder einer bereits vorher abgelegten unidirektionalen Faserlage abgelegt werden. Aber es kommt immer wieder vor, dass statt einer Verlegung auf Stoß Dickstellen, also der Ansatz einer Überlappung, oder Gassen gebildet werden. Ebenso störend kann es bei hohen Anforderungen an einen homogenen Aufbau sein, wenn ein Verlegen auf Lücke mit einem bestimmten Abstand angestrebt ist und statt dessen eine unidirektionale Lage zustande kommt, bei der die Abstände zwischen den einzelnen Segmenten vom gewünschten Maß abweichen und womöglich noch unregelmäßig sind.

Der Erfindung liegt die Aufgabe zugrunde, das eingangs genannte Verfahren in der Weise zu verbessern, dass die angestrebte definierte Position der Segmente zueinander innerhalb einer unidirektionalen Lage zuverlässig erreicht wird und dadurch die Homogenität des gebildeten multiaxialen Fadengeleges verbessert wird.

Diese Aufgabe wird bei dem Verfahren der eingangs genannten Art erfindungsgemäß gemäß dem kennzeichnenden Teil des Anspruchs 1 dadurch erreicht, dass die Breite jedes Segments gemessen wird und nach Maßgabe der gemessenen Breite eine Verlegegeschwindigkeit bestimmt wird, mit der das Segment in der entstehenden Faserlage und in der angestrebten definierten Position zu dem jeweils vorher abgelegten Segment abgelegt wird.

Die erfindungsgemäße Lösung beruht auf der folgenden Beobachtung: die Steuerung der Verlegeeinrichtung wird rechnerisch unter der Annahme ausgelegt, dass die Breite der Segmente einen bestimmten konstanten Wert hat, dass diese Annahme aber in der Praxis nur begrenzt zutrifft. Tatsächlich ändert sich die Breite der zu verlegenden Segmente im Betrieb dauernd. Maßgebliche Einflüsse hierfür sind das zu verarbeitende Fasermaterial, die Temperatur und Feuchtigkeit in der Umgebungsluft, Menge und Art der Schlichte, vor allem aber auch die Spreizparameter bei zu Bändern gespreizten Fasern. Werden beispielsweise mehrere gespreizte Bänder zur Bildung eines Segments auf Stoß nebeneinander gelegt, so entsteht an den Stoßstellen ein Widerstand gegen weiteres Ausbreiten. Es kommt dort zumindest ansatzweise zu einer Überlappung. Demgegenüber rollen sich die freien Kanten der äußeren zu einem Segment gehörenden Bänder geringfügig ein. All das führt zu einer Variation der Segmentbreite, die sich im laufenden Betrieb ständig ändert, rechnerisch nicht zu erfassen ist, aber die Homogenität des herzustellenden multiaxialen Fadengeleges eben doch merklich herabsetzen kann.

Die Erfindung löst dieses Problem, indem das Segment mit einer Verlegegeschwindigkeit abgelegt wird, die seiner gemessenen Breite entspricht. Hierbei wird angenommen, dass alle übrigen Auslegungsparameter der Verlegeeinrichtung zunächst unverändert bleiben; die Laufgeschwindigkeit der Transporteinrichtung bleibt unverändert, ebenso der Zeitpunkt, an dem die Übergabe des abgetrennten Segments an die Transporteinrichtung beginnt und auch die räumliche Zuordnung des vorangehenden, bereits abgelegten Segments zu dem folgenden Segment in eben diesem Zeitpunkt. Dann liegt das Zeitfenster fest, in dem die Transporteinrichtung einen Weg zurücklegt, der der (in Laufrichtung der Transporteinrichtung gemessenen) Segmentbreite zuzüglich oder abzüglich eines Weganteils für seine definierte Position entspricht; im Falle der Verlegung auf Stoß kann dieser Weganteil den Wert Null haben. Exakt innerhalb dieses Zeitfensters muss das hinzu kommende Segment abgelegt sein; für ein breiteres Segment steht somit mehr Zeit zur Verfügung, die Verlegegeschwindigkeit wird verringert; bei einem schmaleren Segment steht weniger Zeit zur Verfügung; die Verlegegeschwindigkeit muss erhöht werden.

Diese Vorgehensweise ist an die verschiedenen bekannten Verlegeeinrichtungen anzupassen. Da die bekannten Verlegeeinrichtungen ohnehin schon mechanisch und steuerungstechnisch auf hohem Niveau arbeiten, kann die zusätzliche Berücksichtigung der Segmentbreite bei der Verlegegeschwindigkeit erfolgen, ohne dass ein übermäßiger baulicher und steuerungstechnischer Aufwand erforderlich wird. Die Messvorrichtung zur Ermittlung der Segmentbreite lässt sich ebenfalls in die vorhandenen Verlegeeinrichtungen integrieren. In dem häufigen Fall, dass die einzelnen Segmente abschnittsweise von einem auf einer Spule befindlichen Vorrat abgezogen werden, wird die Messvorrichtung zweckmäßig am vorderen Ende der Faserschar angeordnet, und zwar vor der Trenneinrichtung zur Vereinzelung der Segmente.

Mit dem erfindungsgemäßen Verfahren gelingt es somit, die einzelnen Segmente in exakter gegenseitiger Positionierung zu einer unidirektionalen Faserlage abzulegen, auch wenn die Breite der zugeführten Segmente unvermeidbaren Schwankungen unterliegt.

Das erfindungsgemäße Verfahren hat seine besondere Bedeutung bei unidirektionalen Faserlagen, deren Fasern zu einem Band gespreizt sind, wobei zumindest ein Band ein jeweiliges Segment bildet. Dabei entstehen sehr dünne unidirektionale Lagen, die sich ohnehin nur in Form von einzelnen, voneinander getrennten Segmenten verlegen lassen. Die einzelnen Bänder werden dabei gassenfrei zu einem jeweiligen Segment und/oder die jeweiligen Segmente gassenfrei der unidirektionalen Faserlage aneinandergelegt. Das Spreizen der Ausgangsfasern zu Bändern wird dabei vielfach schon an der Multiaxialmaschine selbst vorgenommen, was schon anhand des Begriffes "Online-Spreizen" erläutert worden ist.

Bei Segmenten, die aus derartigen Bändern zusammengesetzt werden, besteht dasselbe Problem wie beim Zusammensetzten der Segmente zu einer unidirektionalen Lage. Die Breite der gespreizten Bänder kann schwanken, und es können sich beim Zusammenfügen der Bänder zu einem Segment ebenfalls unerwünschte Verdickungen oder Abstände ergeben, die den homogenen Aufbau des schließlich entstehenden multiaxialen Fadengeleges empfindlich stören. Zur weiteren Verbesserung des erfindungsgemäßen Verfahrens wird deshalb gemäß einer Weiterbildung vorgesehen, dass die Fasern jeweils auf eine im Wesentlichen konstante Breite gespreizt werden und das Spreizen der einzelnen Fasern bewirkende Spreizeinrichtungen in Spreizrichtung bezüglich ihrer Lage zueinander so variiert werden, dass die fertig gespreizten Bänder nach Beendigung des Spreizvorganges zu einem gassenfreien Segment zusammengeführt werden. Damit ist gemeint, dass die Bänder im seitlichen Abstand voneinander oder in getrennten Spreizaggregaten auf eine bestimmte Breite gespreizt werden und beim Zusammenfügen zu einem Segment seitlich verschoben werden, sodass schon innerhalb des Segments die Bänder gassenfrei exakt in einer definierten Position nebeneinander angeordnet werden.

Der Begriff "gassenfrei" kann dabei ein Verlegen auf Stoß oder- gemäß einer weiteren Ausführung - eine überlappende Anordnung zu einem Segment oder auch die überlappende Anordnung der Segmente zu einer unidirektionalen Lage beinhalten.

Das erfindungsgemäße Verfahren kann aber auch in der Weise vorteilhaft geführt werden, dass die fertig gespreizten Bänder zueinander und/oder die Segmente zueinander mit entsprechenden Abständen zueinander abgelegt werden.

Eine weitere vorteilhafte Ausgestaltung des erfindungsgemäßen Verfahrens besteht darin, dass die Breite des Bandes oder des Segmentes ständig gemessen wird. Damit wird berücksichtigt, dass ein vollständig gleichmäßiges Ausgangsmaterial der Fasern oder der Segmente nicht vorausgesetzt werden kann. Ebenso können Temperatur und Feuchtigkeit in der Umgebungsluft sowie Menge und Art der Schlichte und vor allem auch die Spreizparameter bewirken, dass die Breite des Bandes oder des zu verlegenden Segmentes sich im Betrieb ständig verändert. Dem wird durch eine ständige Messung Rechnung getragen, wobei das Ergebnis der Messung gemäß dem erfindungsgemäßen Verfahren gleichfalls ständig berücksichtigt wird. Auf diese Weise ist optimal dafür gesorgt, dass eine gleichmäßige homogene Ablage der unidirektionalen Faserlagen und des multiaxialen Fadengeleges gesichert ist.

Das im Hauptanspruch definierte Verfahren setzt zunächst voraus, dass die wechselnde Breite der verlegten Segmente bei der Verlegegeschwindigkeit berücksichtigt wird, wobei die übrigen Auslegungsparameter der Verlegeeinrichtung zunächst unverändert bleiben. Das Verfahren kann aber auch in der Weise vorteilhaft variiert werden, dass den Segmenten zum Ablegen eine Bewegungskomponente relativ zur Transportrichtung zur Kompensation ihrer Breitenvariation aufgeprägt wird. Dasselbe gilt dann auch für die einzelnen Bänder, wenn diese zur Bildung eines Segments nebeneinander gelegt werden.

Eine weitere Verfeinerung des erfindungsgemäßen Verfahrens erfolgt dadurch, dass mehrere Fasern in getrennten oder gemeinsamen Spreizeinrichtungen im Wesentlichen gleichzeitig zu Bändern gespreizt und anschließend zusammengeführt werden.

Wenn sehr hohe Anforderungen an die Homogenität des herzustellenden multiaxialen Fadengeleges gestellt werden, kann das Verfahren auch derart geführt werden, dass die Breiten der Bänder oder Segmente gezielt auf ein definiertes Flächengewicht eingestellt werden. Auch hierdurch können sich Bänder oder Segmente mit einer Breite ergeben, die von einem theoretischen Ausgangswert abweicht und im laufenden Betrieb veränderlich ist. Durch die erfindungsgemäßen Maßnahmen wird die unterschiedliche Breite aber wieder ausgeglichen.

Zur genauen Verfahrensführung und zu einem exakt gesteuerten Spreizvorgang kann weiter in vorteilhafter Weise vorgesehen werden, dass die auf den Fasern vorhandene Schlichte insbesondere thermisch oder chemisch aufgebrochen wird, wobei das Aufbrechen vor, während oder nach dem Spreizen vorgenommen wird. Auf diese Weise wird das Spreizen erleichtert und ein dauerhaftes Ergebnis bewirkt, weil die elastischen Rückstellkräfte zwischen den Filamenten der einzelnen Fasern weitgehend geschwächt werden.

Zu einer exakten Fadenführung kann es weiter beitragen, dass den einzelnen Bändern oder den einzelnen Segmenten oder der unidirektionalen Faserlage Querkohäsion erteilt wird, insbesondere durch ein chemisches Bindemittel oder durch mechanische oder hydraulische Behandlung.

Eine Qualitätssteigerung wird in jedem Fall dann erzielt, wenn die Bänder auf eine Sollbreite zur Erzielung einer gassenfreien Lage oder einer zumindest bereichsweise gestuften überlappenden Lage und/oder Lage mit definieren Flächengewicht geregelt werden.

Dabei wird zweckmäßig in der Weise vorgegangen, dass die Breite der Bänder unmittelbar nach Verlassen der Spreizeinrichtung gemessen und die Bänder einer Regeleinrichtung zur Regelung der Sollbreite zugeführt werden.

Das erfindungsgemäße Verfahren soll mit Fasern aus Kohlenstoff, Keramik, Glas, Aramid, Mischungen von oder aus deren Vor- und/oder Zwischenprodukten durchgeführt werden und wird hierbei die angegebenen Verbesserungen erzielen.

Mit dem erfindungsgemäßen Verfahren wird eine besonders gleichmäßige Ablage der einzelnen Segmente zu einer unidirektionalen Faserlage angestrebt. Wie aus den Ausführungen zu den vorteilhaften Weiterbildungen des erfindungsgemäßen Verfahrens nach Anspruch 1 hervorgeht, trägt es zum Erreichen dieses Ziels in vorteilhafter Weise bei, dass bereits beim Zusammenfügen der Bänder aus den gespreizten Fasern zu den einzelnen Segmenten eine gleichmäßige Anordnung und exakte gegenseitige Positionierung der Bänder erreicht wird. Hierzu ist eine besonders angepasste Vorrichtung entwickelt worden, mit der eine unidirektionale Faserlage erstellt wird, die als Ausgangsmaterial für die abzulegenden Segmente dient und diese vorteilhaften Eigenschaften aufweist.

Die Erfindung betrifft deshalb auch eine Vorrichtung zum Erstellen einer unidirektionalen Faserlage aus gleichgerichteten, zu Bändern verbreiterten Fasern, die in Längsrichtung der Faserlage verlaufen, mit je einer Vorratsspule für jede Faser, mit je einer Fadenführungseinrichtung für jede Faser und mit mindestens einer Spreizstation, wobei die Fasern parallel im Abstand zu einander von den Vorratsspulen kommend die Fadenführungseinrichtungen und die Spreizstation durchlaufen und danach als verbreiterte Bänder in einer definierten Position zueinander zur Bildung der unidirektionalen Faserlage zusammengeführt werden, gemäß dem Oberbegriff des Anspruchs 17.

Eine Vorrichtung dieser Art ist aus der eingangs schon erwähnten DE 10 2005 008 705 B3 bekannt. Gemäß diesem Stand der Technik werden die zu verbreiternden Fasern von einzelnen Spulen eines Spulengatters abgezogen und einer Spreizstation zugeführt, die in mehreren Stufen mit beheizten Umlenkstäben und einem Heizkanal arbeitet. Nach Verlassen des Heizkanals werden die verbreiterten Bänder unmittelbar einer Verlegeeinrichtung zugeführt, wobei über ihre gegenseitige genaue Anordnung nichts ausgesagt wird. Die vorbekannte Vorrichtung arbeitet somit im Online-Verfahren; deshalb ist das Spreizaggregat auch mit einem Bandspeicher versehen, der die unregelmäßige Abnahme der gespreizten Bänder durch die Verlegeeinrichtung ausgleichen soll. Bei der DE 10 2005 008 705 B3 sind dem Spreizaggregat Bandschwenker vorgeordnet, die bewirken, dass die von Spulen mit Kreuzwicklung abgezogenen Fasern einem festem Anlaufpunkt im Spreizaggregat zugeführt werden. Insoweit bilden die Bandschwenker eine Fadenführungseinrichtung. Die Fasern und Bänder werden bei der Vorrichtung gemäß der DE 10 2005 008 705 B3 über ihren gesamten Verlauf stets im gegenseitigen seitlichen Abstand voneinander geführt.

Der Erfindung liegt hingegen die Aufgabe zugrunde, eine Vorrichtung der bekannten Art zu schaffen, mit der eine besonders gleichmäßige unidirektionale Faserlage mit exakter Einhaltung der gegenseitig definierten Position der Bänder hergestellt wird.

Diese Aufgabe wird gemäß dem kennzeichnenden Teil des Anspruchs 17 dadurch gelöst, dass hinter der Spreizstation eine Messstation angeordnet ist, in der die Breite jedes Bandes gemessen wird, und dass eine Einrichtung zum Steuern der Fadenführungseinrichtungen vorgesehen ist, durch die die Bänder nach Maßgabe ihrer gemessenen Breite in der angestrebten definierten Position nebeneinander angeordnet werden.

Mit der erfindungsgemäßen Vorrichtung wird somit eine bestimmte gleichmäßige Anordnung der die Spreizstation verlassenden Bänder zur Bildung der unidirektionalen Lage erzielt. Das kann eine gassenfreie Ablage wie z. B. bei der Anordnung auf Stoß aber auch eine mit Lücken versehene Ablage sein, bei der dann aber die gegenseitigen Abstände exakt eingehalten werden. Die mit der erfindungsgemäßen Vorrichtung hergestellte unidirektionale Lage soll als endloser Vorrat bei der Durchführung des erfindungsgemäßen Verfahrens zur Herstellung der aus einzelnen Segmenten bestehenden unidirektionalen Faserlage dienen. Hierbei werden einzelne Segmente in der beschriebenen Weise von dem Endlosvorrat abgetrennt und der Transporteinrichtung zugeführt.

Eine vorteilhafte Weiterbildung der erfindungsgemäßen Vorrichtung besteht darin, dass jede Fadenführungseinrichtung in der Spreizrichtung verstellbar angeordnet ist. Die angestrebte seitliche Zuordnung der fertig gespreizten Bänder kann dadurch vorbereitet werden, dass die zunächst noch im gegenseitigen Abstand befindlichen Fasern schon beim Eintritt in das Spreizaggregat den richtigen Abstand von einander haben, der dann zu der gewünschten exakten Positionierung beim Austritt aus dem Spreizaggregat führt.

Eine weitere Qualitätssteigerung der Vorrichtung wird dadurch erzielt, dass die Spreizstation mit einer Einrichtung zum Einstellen des Spreizgrades der Fasern versehen ist.

Eine derartige Einrichtung kann aus einem Vibrationsstab, aus seitlich in die Spreizstation einschiebbaren zusätzlichen Walzen, aus einer Abbremseinrichtung der Vorratsspulen zum gezielten Spannungsaufbau, aus einer Heizeinrichtung oder einer Einrichtung zum Variieren des Umschlingungswinkels der Bänder um die Spreizwalzen bestehen. Entscheidend ist in jedem Fall, dass der Spreizgrad gezielt eingestellt wird.

Ein besonders gleichmäßiges Ergebnis wird mit der erfindungsgemäßen Vorrichtung gemäß einer weiteren vorteilhaften Einrichtung dadurch erzielt, dass eine Heizeinrichtung vorgesehen ist, welche vor der Fadenführungseinrichtung angeordnet ist oder eine solche Länge aufweist, dass eine Beheizung der gespreizten Faser vor, während oder nach der Spreizeinrichtung erfolgt.

Die Erfindung wird anschließend anhand von Ausführungsbeispielen noch näher erläutert. In den Figuren ist das Folgende dargestellt:
- Fig. 1: zeigt schematisch in einer Ansicht von oben eine Vorrichtung zur Durchführung des er findungsgemäßen Verfahrens in einer ersten Phase des Verlegevorgangs.
- Fig. 2: ist eine Seitenansicht des zugehörigen Laufwagens.
- Fig. 3: ist eine der Fig. 1 entsprechende Ansicht in einer zweiten Phase.
- Fig. 4: zeigt eine darauf folgende dritte Phase des Verlegevorgangs.
- Fig. 5a bis 5d: enthält eine vergrößerte Ansicht von Einzelheiten des Verlegevorgangs bei einer anderen Verlegerichtung.
- Fig. 6: ist eine schematische Darstellung der parallelen Ablage von verbreiterten Bändern unter Berücksichtigung der gemessenen Breite der Bänder.
- Fig. 7: zeigt eine ähnliche Möglichkeit, bei der die Fasern seitlich verschoben werden.
- Fig. 8: stellt eine Möglichkeit dar, die verbreiterten Bänder in der angestrebten definierten Position nebeneinander zu legen, indem der Spreizgrad beeinflusst wird.
- Fig. 9: enthält dieselbe Darstellung, abgestellt auf den Aufbau einer Vorratsspule mit einer derartigen Anordnung von nebeneinander angeordneten Bändern.

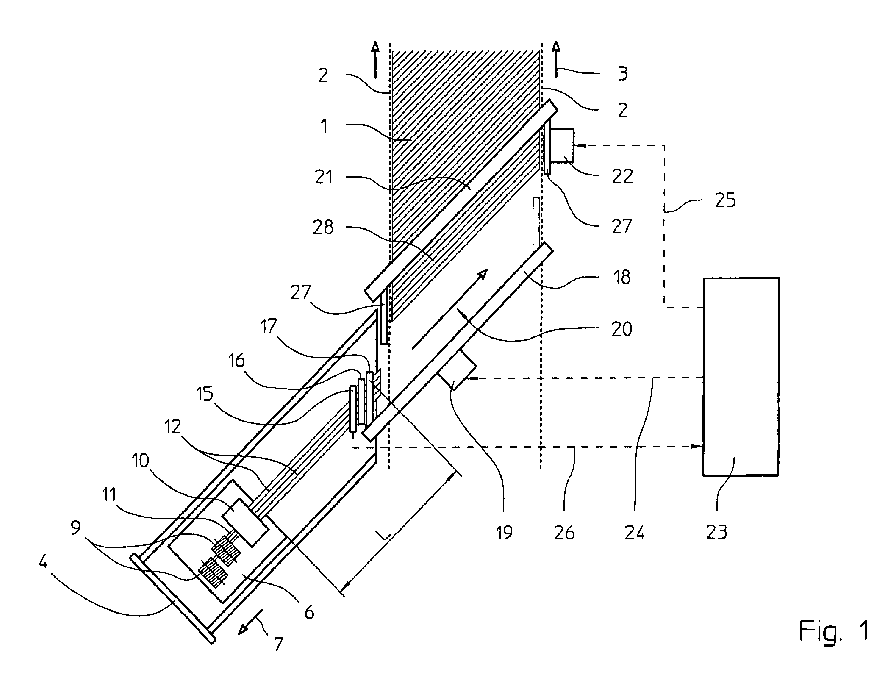

In Fig. 1 ist in einer Ansicht von oben ein Ausschnitt aus einer Multiaxialmaschine zum Aufbau eines multiaxialen Fadengeleges gezeigt. Dabei wird eine einzelne Vorrichtung zum Ablegen einer unidirektionalen Faserlage 1 dargestellt. Diese befindet sich auf einer Transporteinrichtung, die durch zwei endlose Förderketten 2 gebildet wird und sich mit konstanter Geschwindigkeit in der Förderrichtung 3 bewegt. Die entstehende unidirektionale Faserlage 1 ist an den Förderketten 2 befestigt und bewegt sich in der Form einer endlosen Bahn ebenfalls in der Förderrichtung 3. Am Ende der Transporteinrichtung befindet sich eine nicht dargestellte Verbindungsstation, in der die einzelne unidirektionale Lage 1 mit weiteren vorher oder anschließend abgelegten Faserlagen in bekannter Weise verbunden wird.

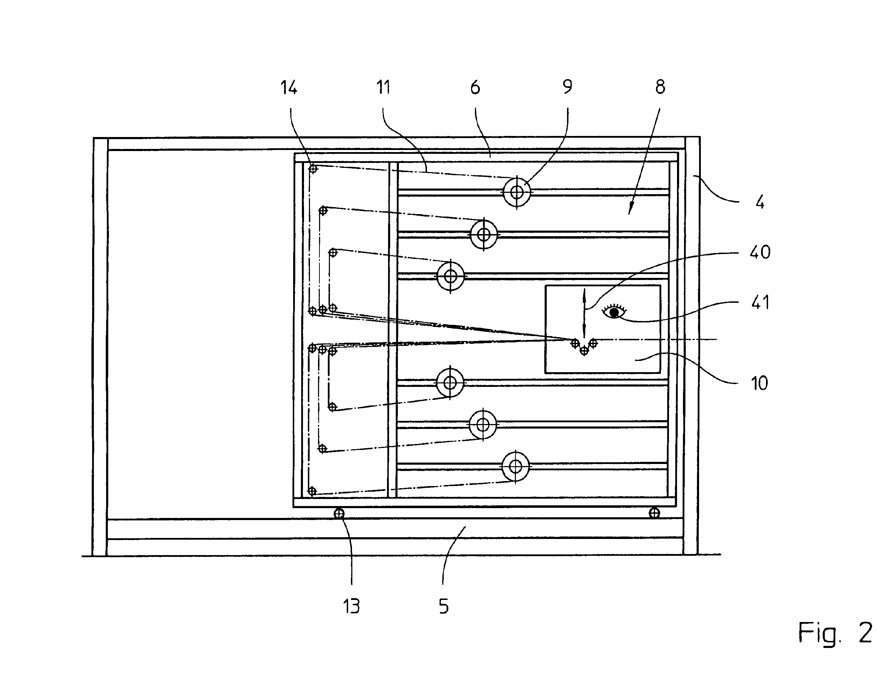

Das Maschinengestell der Multiaxialmaschine weist einen seitlichen Anbau 4 auf, der mit Führungsschienen 5 (Fig. 2) für einen Laufwagen 6 versehen ist. Der Laufwagen 6 hat einen elektromotorischen Antrieb und wird gesteuert im Takt mit dem Verlegevorgang auf den Führungsschienen 5 hin und her gefahren, vgl. hierzu die Bewegungspfeile 7 in Fig. 1, 3 und 4, wobei die Bewegungsrichtung je nach Bewegungsphase auch umgekehrt zu der gezeichneten Pfeilrichtung verläuft. Mit L ist der Bewegungshub des Laufwagens 6 bezeichnet.

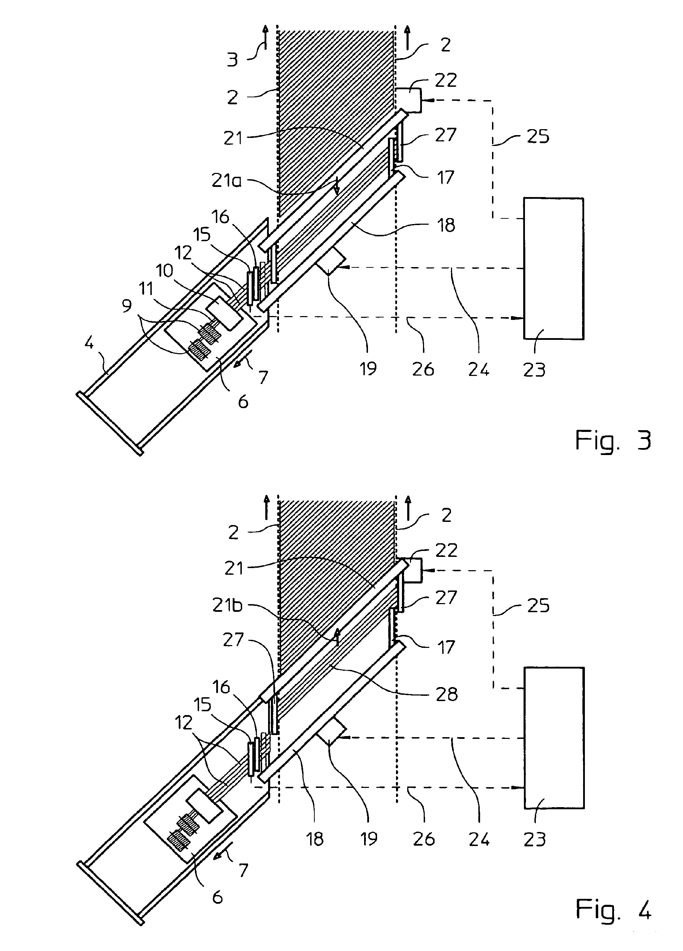

Der Laufwagen bildet eine gemeinsame bauliche Einheit für ein Spulengatter 8, von dem in Fig. 1 zwei Spulen 9 zu sehen sind, und für ein Spreizaggregat 10. Von den Spulen 9 des Spulengatters 8 werden einzelne Fasern 11 abgezogen und dem Spreizaggregat 10 zugeführt, das die Fasern 11 in der Form von verbreiterten Bändern 12 wieder verlassen. Die Fasern 12 bilden dabei zusammen eine Faserschar, in der die Bänder 12 gassenfrei und auf Stoß, also mit gegenseitiger seitlicher Berührung, nebeneinander liegen. Die Breite dieser Faserschar ist bereits die Breite des einzelnen, abgetrennten und abzulegenden Segments 28 (Fig. 4).

Fig. 2 zeigt weitere Einzelheiten des Laufwagens 6. Mit 13 sind die Laufrollen des Laufwagens 6 angedeutet. Von jeder Spule 9 wird eine einzelne Faser 11 passiv oder aktiv abgezogen und über Umlenkrollen 14 dem Spreizaggregat 10 zugeführt. Die Fasern 11 berühren dabei einander nicht, auch nicht in seitlicher Richtung. Die Spulen 9 des Spulengatters 8 sind deshalb auch in axialer Richtung gegeneinander versetzt, wie aus Fig. 1 erkennbar ist.

Die aus den Bändern 12 bestehende Faserschar durchläuft sodann die Messvorrichtung 15, in der die Breite der Faserschar gemessen wird, und gelangt an die Halte- und Erfassungseinrichtung 16, die taktweise gesteuert das vordere Ende der Faserschar festklemmt oder es frei gibt, wenn es über die Förderketten 2 gezogen wird. Hierzu dient ein Greifer 17, der längs einer Führungsbahn 18 bewegt wird. Der Greifer 17 wird durch einen Antriebsmotor 19 angetrieben, dessen Drehzahl regelbar ist. Dieser kann beispielsweise einen Zahnriemen in wechselnden Richtungen antreiben, an dem der Greifer 17 befestigt ist. Mit 20 ist die Verlegerichtung der Segmente 28 bezeichnet. Ersichtlich verlaufen der seitliche Anbau 4 des Maschinengestells, die Führungsschienen 5 für den Laufwagen 6 und die Führungsbahn 18 für den Greifer 17 alle in derselben Richtung, nämlich in der Verlegerichtung 20 der Segmente 28.

Der Greifer 17 arbeitet mit einer Leger-Klemmeinrichtung 21 zusammen, die wieder aus einem besonderen, für sich angetriebenen Wagen besteht. Dieser Wagen fährt über den Förderketten 2 in deren Längsrichtung angetrieben hin und her. Zu seinem Antrieb dient wieder ein eigener regelbarer Antriebsmotor 22, dessen Drehzahl regelbar ist und der beispielsweise einen Zahnriemen antreibt, an dem der Wagen befestigt ist. Das Hauptteil der Leger-Klemmeinrichtung 21 ist brückenartig ausgebildet und stützt sich zu beiden Seiten der Transporteinrichtung auf zusätzlichen Laufschienen ab, die nicht dargestellt sind. Dabei verläuft das Hauptteil schräg zur Laufrichtung der Transporteinrichtung, nämlich wieder in der Verlegerichtung 20 der Segmente 28. In den Fig. 1, 3 und 4 sind zwei von dem Hauptteil abstehende stegartige Vorsprünge 27 zu erkennen, an denen sich unten Klemmelemente zum vorübergehenden Halten der Segmente 28 befinden. Die Leger-Klemmeinrichtung 21 hat insgesamt die Form eines verfahrbaren Portals. Die Klemmelemente sind senkrecht zu der Bewegungsbahn der Leger-Klemmeinrichtung 21 auf und ab bewegbar. Die Geschwindigkeit der regelbaren Antriebsmotoren 19 und 22 wird von einer Steuereinrichtung 23 über Steuerleitungen 24 und 25 bestimmt. Die Steuereinrichtung 23 erhält dazu von der Messvorrichtung 15 über eine Signalleitung 26 ein die Breite des Segments angebendes Signal, das in der Steuereinrichtung 23 verarbeitet wird.

Im Folgenden wird anhand von drei herausgegriffenen Bewegungsphasen gemäß den Figuren 1, 3 und 4 der Bewegungsablauf beim Ablegen der Segmente noch einmal kurz zusammengefasst beschrieben, wie er in der nachveröffentlichten europäischen Patentanmeldung EP 07 011 718.9 im einzelnen geschildert ist. Fig. 1 zeigt den Zustand, wie ein einzelnes Segment 28 gerade abgelegt worden und zum Bestandteil der unidirektionalen Lage 1 geworden ist. Die Halte- und Erfassungseinrichtung 16 hält die Faserschar mit den Bändern 20 gerade noch klemmend fest, während der Greifer 17 deren vorderes Ende erfasst. Der Laufwagen 6 bewegt sich noch nach außen, um die nicht benötigte Länge der Faserschar in einer Warteschleife unterzubringen. Anschließend öffnet die Halte- und Klemmeinrichtung 16, und der Greifer 17 zieht die Faserschar in der Verlegerichtung 20 quer über die Förderketten 2. Der Laufwagen 6 kehrt seine Laufrichtung um und stellt seine gespeicherte Faserschar-Länge für den Verlegevorgang zur Verfügung.

Das Ende dieser Bewegungsphase ist in Fig. 3 gezeigt. Der Greifer 17 ist am gegenüberliegenden Ende seiner Führungsbahn 18 angekommen und bleibt stehen. Der Laufwagen 6 kehrt seine Laufrichtung abermals um und baut erneut eine Warteschleife für das jetzt nicht benötigte Bandmaterial auf. Die Leger-Klemmeinrichtung 21 bewegt sich gemäß dem Bewegungspfeil 21a entgegengesetzt zu der Laufrichtung 3 der Förderketten 2 auf den Greifer 17 und die Halte- und Klemmeinrichtung 16 zu, um das entstehende Segment 28 zu übernehmen.

Anschließend klemmt die Halte- und Klemmeinrichtung 16 die Faserschar wieder fest, und eine nicht dargestellte Trenneinrichtung trennt das verlegte vordere Ende der Faserschar von dem auf dem Laufwagen 6 befindlichen Vorrat ab, vgl. Fig. 4. Damit liegt jetzt das abgetrennte einzelne Segment 28 vor, das abgelegt werden soll. Die Leger-Klemmeinrichtung 21 nimmt das Segment 28 und bewegt es gemäß dem Bewegungspfeil 21 b mit zunehmender Geschwindigkeit in der Laufrichtung 3 der Förderketten 2. Wenn die Transportgeschwindigkeit des Segments 18 mit der Laufgeschwindigkeit der Förderketten 2 übereinstimmt, wird es von den Klemmelementen der Leger-Klemmeinrichtung 21 an die Befestigungseinrichtungen übergeben, die sich an den Förderketten 2 befinden.

Die bisher beschriebene Funktion wird auch schon durch das Verfahren und die Einrichtung gemäß der erwähnten nachveröffentlichten europäischen Patentanmeldung EP 07 011 718.9 erzielt. Indem das Spulengatter 8 und das Spreizaggregat 10 als zusammengefasste bauliche Einheit auf einem Laufwagen 6 taktweise hin- und hergefahren werden, erfolgt ein Ausgleich zu der unregelmäßigen Abnahme des verbreiterten Bandmaterials durch die Verlegeeinrichtung. Die Fasern 11 des Ausgangsmaterials können dadurch gleichmäßig von den Spulen 9 abgezogen und durch das Spreizaggregat 10 geführt werden, wodurch sich gleichmäßige Segmente bei der Bildung der unidirektionalen Faserlage und dadurch eine verbesserte Homogenität des entstehenden multiaxialen Fadengeleges ergeben.

Das Neue gemäß der vorliegenden Anmeldung besteht darin, dass mittels der Messvorrichtung 15 die Gesamtbreite der Faserschar aus den nebeneinander liegenden Bändern 12, die als Vorrat für die zu verlegenden einzelnen Segmente 28 dient, im laufenden Betrieb ständig gemessen wird. Über die Signalleitung 26 wird das Messsignal der Steuereinrichtung 23 zugeführt und in dieser rechnerisch zu einem Korrekturwert verarbeitet. Da die Laufgeschwindigkeit der beiden Förderketten 2 unverändert bleibt, muss ein neu hinzukommendes Segment 28 innerhalb einer ganz bestimmten Zeit auf den Förderketten 2 oder einer bereits vorher abgelegten unidirektionalen Faserlage 1 abgelegt werden, wenn das neu hinzukommende Segment exakt in seiner vorher bestimmten definierten Position zu dem jeweils vorher abgelegten Segment 28 abgelegt werden soll. Die Anpassung an das bestehende Zeitfenster gelingt, indem die Geschwindigkeit des Verlegevorgangs entsprechend der gemessenen Bandbreite verändert wird. Hierzu kann ein Zugriff auf die regelbare Drehzahl des Antriebsmotors 19, der den Greifer 17 antreibt, oder die regelbare Drehzahl des Antriebsmotors 22, der die Leger-Klemmeinrichtung 21 antreibt, oder auf beide Antriebsmotoren 19, 22 erfolgen. Ein entsprechendes Steuersignal wird in der Steuereinrichtung 23 gebildet und über die Steuerleitungen 24, 25 den beiden Antriebsmotoren 19, 22 zugeführt. Auf diese Weise gelingt es, die betrieblich unvermeidbaren Schwankungen der Segmentbreite im Zuge des Verlegevorganges auszugleichen.

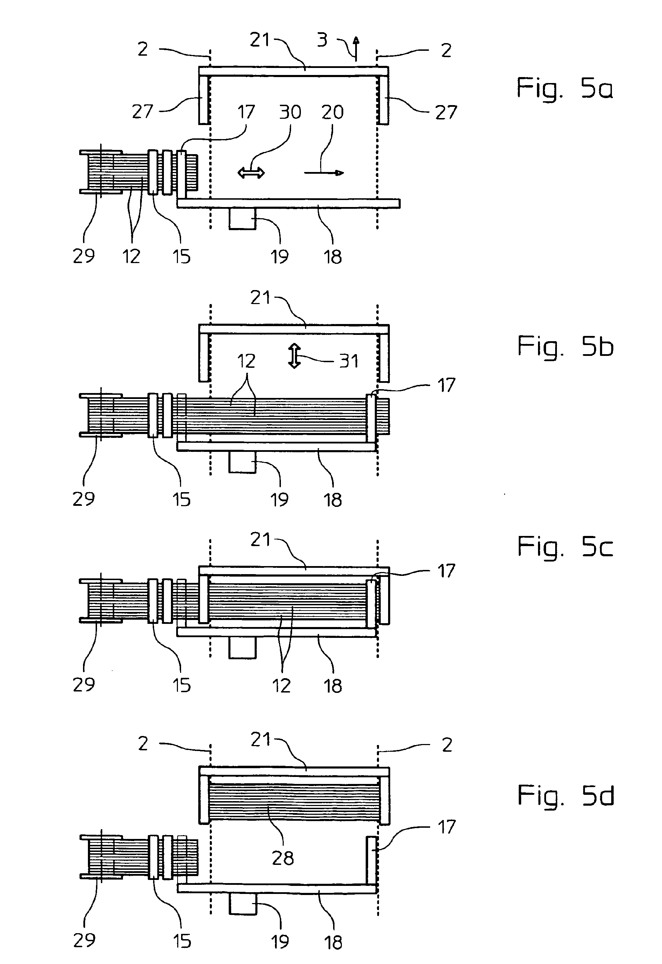

Das erfindungsgemäße Verfahren ist nicht auf das so genannte Online-Spreizen beschränkt, bei dem die Verbreiterung der Fasern 11 zu den Bändern 12 an der Multiaxialmaschine und in direkter Abstimmung auf den Verlegevorgang erfolgt. Zur Erläuterung wird auf das Ausführungsbeispiel gemäß den Figuren 5a bis 5d verwiesen. Hierbei wird die Faserschar aus den nebeneinander liegenden Bändern 12 in einem vorhergehenden, getrennten Arbeitsgang hergestellt und auf einer Vorratsspule zur Verfügung gestellt, die als Scheibenspule 29 ausgebildet ist. Die Figuren 5a bis 5d zeigen nur die für das erfindungsgemäße Verfahren wesentlichen Teile der Verlegeeinrichtung. Die Scheibenspule 29 wird an der Multiaxialmaschine angebracht, und die nebeneinander liegenden Bänder 12 werden wieder aktiv oder passiv von der Scheibenspule 29 abgezogen. Die Verlegerichtung 20 der Segmente 28 verläuft hierbei genau senkrecht zu der Förderrichtung 3 der Förderketten 2. Die Bänder 12 durchlaufen wieder die Messvorrichtung 15 und werden nach Freigabe durch die hier nicht dargestellte Halte- und Erfassungseinrichtung von dem Greifer 17 entlang von dessen Führungsbahn 18 senkrecht quer über die Förderketten 2 gezogen. Der Greifer 17 arbeitet wieder mit der Leger-Klemmeinrichtung 21 zusammen, wobei die wechselnde Laufrichtung des Greifers 17 durch den Doppelpfeil 30 und die wechselnde Laufrichtung der Leger-Klemmeinrichtung 21 durch den Doppelpfeil 31 angegeben ist.

Gemäß Figur 5a hat der Greifer 17 das vordere Ende der Faserschar mit den Bändern 12 erfasst und beginnt seinen Weg quer über die Förderketten 2. Gemäß Figur 5b ist diese Bewegung abgeschlossen. Die Leger-Klemmeinrichtung 21 setzt sich in Richtung auf den Greifer 17 und seine Führungsbahn 18 in Bewegung, bis die Vorsprünge 27 mit den daran befindlichen Klemmelementen über den Bändern 12 stehen; dieser Zustand ist gemäß Figur 5c erreicht. Aus Figur 5d ist der letzte abschließende Schritt ersichtlich, in dem die Klemmelemente an den Vorsprüngen 27 die herangeführte Faserschar ergriffen haben und in dem diese von dem auf der Scheibenspule 29 befindlichen Vorrat abgetrennt wird. Damit ist das einzelne Segment 28 gebildet, das sodann von der Leger-Klemmeinrichtung 21 an die Befestigungseinrichtungen übergeben wird, die sich an den Förderketten 2 befinden.

Bei dieser Art der Verlegung muss die Scheibenspule 29 zeitweise stillstehen; sie dreht sich nur während der Verlegephase des Greifers 17. Im Übrigen wird auch beim Ausführungsbeispiel gemäß den Figuren 5a bis 5d die Breite der aus den Bändern 12 bestehenden Faserschar ermittelt und als Einflussgröße zur Verlegegeschwindigkeit der Segmente 28 herangezogen. Hierzu kann wieder mittels einer Steuereinrichtung 23 die Drehgeschwindigkeit des Antriebsmotors 19 für den Greifer 17 und/oder die Drehgeschwindigkeit des (in den Figuren 5a bis 5d nicht dargestellten) Antriebsmotors der Leger-Klemmeinrichtung verändert und geregelt werden.

Es sei noch bemerkt, dass die Messvorrichtung 15 zur Ermittlung der Segmentbreite nicht zwingend vor der Halte- und Erfassungseinrichtung 16 angeordnet sein muss, wie das in den Figuren 1, 3 und 4 dargestellt ist. Die Messung kann auch auf der anderen Seite der Halte- und Erfassungseinrichtung 16 erfolgen, also an dem vorderen Abschnitt der Faserschar, die sich unmittelbar hinter dem Greifer 17 befindet und schon über die Förderketten 2 gezogen wird oder ist. Bei den heute verfügbaren schnellen Messverfahren ist es sogar noch möglich, die Messung an dem bereits abgelängten Segment 18 vorzunehmen und dabei dennoch den Antriebsmotor 22 der Leger-Klemmeinrichtung rechtzeitig zu beeinflussen. Die Messung der Segmentbreite kann mit zahlreichen bekannten Methoden erfolgen. Besonders geeignet sind Zeilenkameras und Lichtbandsensoren.

Wenn in den Ausführungsbeispielen gemäß Figur 1 bis 5d das erfindungsgemäße Verfahren bei einer Anordnung der nebeneinander liegenden Bänder 12 "auf Stoß" erläutert wird, so bedeutet das ebenfalls keine Einschränkung. In derselben Weise wie dargestellt kann auch eine andere definierte Position verwirklicht werden, beispielsweise eine teilweise Überlappung oder ein Verlegen mit genau vorgeschriebener Lücke zwischen den einzelnen Segmenten.

In der überwiegenden Zahl der Fälle werden Segmente verlegt werden, die aus einer Vielzahl von nebeneinander liegenden Bändern 12 zusammengesetzt sind. Damit stellt sich das für die Segmente 28 bestehende Problem in der gleichen Weise auch beim Verlegen der Bänder 12 zu einer Faserschar, aus der die einzelnen Segmente 28 gebildet werden. Solange nicht besondere Maßnahmen getroffen werden, besteht auch hinsichtlich der Bänder 12 die Möglichkeit, dass diese den Spreizvorgang mit unterschiedlicher und sich im Laufe eines Fertigungsvorganges verändernder Breite verlassen. Daher werden zur weiteren Verbesserung auch schon beim Verbreitern der Fasern 11 und bei der parallelen Zusammenführung der Bänder 12 Maßnahmen zu treffen sein, die bewirken, dass auch hierbei exakt eine angestrebte definierte Position zwischen den einzelnen Bändern 12 zustande kommt.

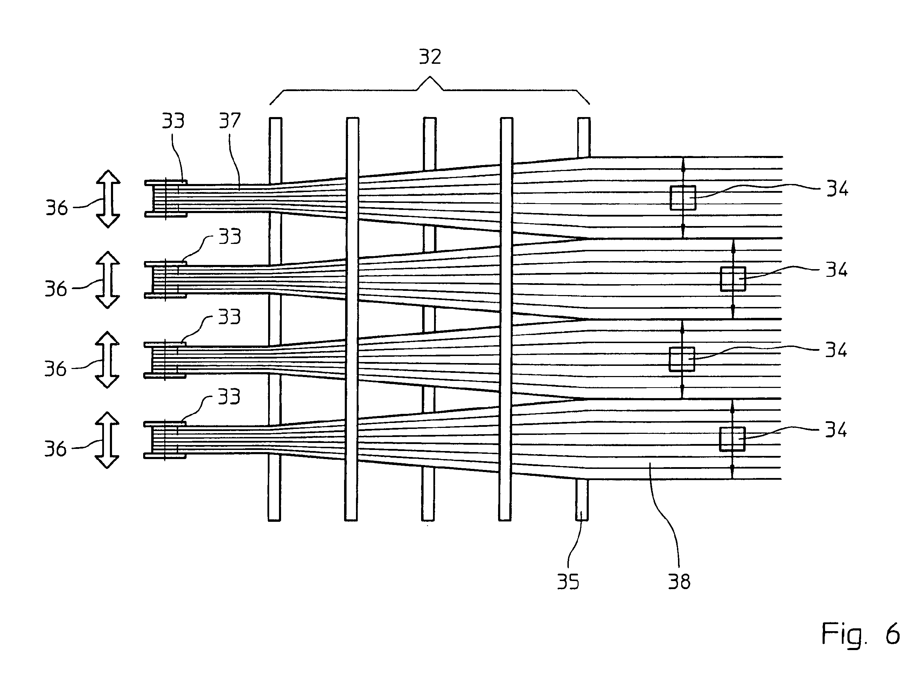

Eine erste Möglichkeit hierzu zeigt die Figur 6. Dort ist schematisch ein Spreizaggregat 32 angedeutet, in das vier mit Abstand nebeneinander angeordnete Fasern 37 einlaufen, die von einzelnen Scheibenspulen 33 abgezogen werden. Die Fasern durchlaufen gemeinsam die Einrichtungen zur Verbreiterung, bei denen es sich beispielsweise um Walzen 35 handeln kann, aber auch um Heizeinrichtungen oder Vibrationsstäbe. Das Spreizaggregat kann derart eingestellt sein, dass die Bänder auf eine im Wesentlichen konstante Breite gespreizt werden. Zusätzlich wird aber mit Messvorrichtungen 34 ständig die Breite der Bänder gemessen, welche das Spreizaggregat verlassen. Nach Maßgabe der gemessenen Breite werden sodann die Scheibenspulen 33 in ihre Axialrichtung abgestimmt verschoben, wie das durch die Doppelpfeile 36 für die Verschieberichtung angedeutet wird. Auf diese Weise ist erreicht, dass die exakt definierte Position der Bänder zueinander auch bei Abweichungen und Änderungen im Laufe des Verfahrens genau eingehalten werden kann.

Die konkrete Ausführung mit Messvorrichtung, Signalleitung, rechnerischer Auswertung und Stellbefehl für die axiale Verlagerung der Scheibenspulen 33 kann als fachüblich vorausgesetzt werden, wenn die Zielrichtung bekannt ist. Insofern sind hierzu weitere Erläuterungen nicht mehr erforderlich.

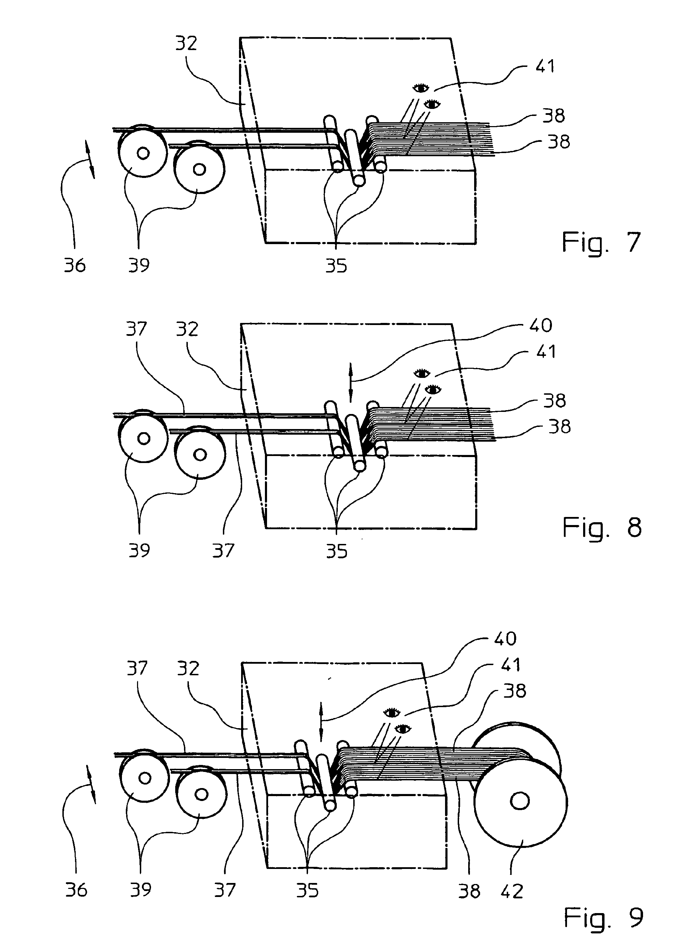

Gemäß Figur 7 ist eine weitere Möglichkeit für diese Vorgehensweise gezeigt, z.B. für Kreuzspulen. Dem Spreizaggregat 32 sind hierbei Fadenführungselemente 39 vorgeschaltet, die anstelle der Scheibenspulen 33 axial verlagert werden können, wenn eine veränderliche Breite der gespreizten Bänder 38 das erfordert. Die Verlagerung der Fadenführungselemente 39 ist durch den Doppelpfeil 36 angedeutet. Als Fadenführungselement 39 kann beispielsweise eine Kalibrierrolle dienen, die in vielen Fällen dem Spreizaggregat 32 ohnehin vorgeschaltet wird.

Wieder eine andere Möglichkeit ist in Figur 8 dargestellt. Hierbei wird nach Maßgabe der gemessenen Bandbreite der Spreizgrad des Fasermaterials geändert, indem z.B. bei einem Spreizaggregat 32 mit Walzen 35 der gegenseitige Abstand der Walzen 35 verändert wird, vgl. hierzu den Doppelpfeil 40, der eine Verlagerung der mittleren Walze 35 andeutet. In diesem Fall werden also nicht mehr die einzelnen Bänder 38 durch seitliches Verschieben exakt aneinander angepasst, sondern die Breite wird von vornherein so eingestellt, dass eine Parallelanordnung in der angestrebten definierten Position zustande kommt.

Die anhand der Figuren 6 bis 8 beschriebenen Möglichkeiten können einzeln oder in Kombination miteinander durchgeführt werden, wenn das im Einzelfall sinnvoll ist. Sie können angewandt werden, wenn die Fasern 37 im Zuge des Verlegevorgangs von Vorratsspulen abgezogen werden, also beim so genannten Offline-Spreizen. Ebenso ist aber auch eine gesteuerte parallele Ablage der Bänder beim so genannten Online-Spreizen möglich. In Figur 2 ist diese Möglichkeit mit der Bezugsziffer 41 hervorgehoben, die eine Messvorrichtung symbolisiert, mit der die Breite der bereits gespreizten Fasern 11, also der Bänder 12, gemessen wird. Die Bezugsziffer 40 in Figur 2 hebt desgleichen hervor, dass hierbei ein Spreizaggregat 10 vorgesehen ist, dessen Spreizgrad nach Maßgabe der gemessenen Bandbreite verändert wird.

Schließlich wird auch in Betracht gezogen, dass die hier beschriebenen Methoden zu einer verbesserten Parallelanordnung von verbreiterten Fasern 11 schon bei der Anordnung von derartigen Faserscharen auf Vorratsspulen durchgeführt wird. Diese Möglichkeit ist in Figur 9 dargestellt. Von einem Vorrat laufen einzeln voneinander Fasern 37 über Fadenführungselemente 39, die auch Kalibrierrollen sein können, dem Spreizaggregat 32 zu, in dem die Fasern 37 gespreizt und zusammengeführt werden. Die das Spreizaggregat 32 verlassenden Bänder 38 werden auf einer Scheibenspule 42 aufgewickelt, die als Vorratsmaterial transportiert und an anderer Stelle verwendet werden kann. Auch hierbei sind Messvorrichtungen 41 für die einzelnen Bänder 38 vorgesehen. Nach Maßgabe der von diesen Messvorrichtungen 41 gemessenen Breite der Bänder 38 können wieder die Fadenführungselemente 39 axial verschoben werden (Doppelpfeil 36), oder es wird der Spreizgrad des Spreizaggregats 32 verändert (Doppelpfeil 40).

**Liste der Bezugsziffern**

| | |
|---|---|
| 1 | unidirektionale Faserlage |
| 2 | Förderkette |
| 3 | Richtungspfeil für die Förderrichtung der Förderketten |
| 4 | seitlicher Anbau |
| 5 | Führungsschienen |
| 6 | Laufwagen |
| 7 | Bewegungspfeile |
| 8 | Spulengatter |
| 9 | Spulen |
| 10 | Spreizaggregat |
| 11 | Fasern |
| 12 | Bänder |
| 13 | Laufrollen |
| 14 | Umlenkrolle |
| 15 | Messvorrichtung zur Ermittlung der Segmentbreite |
| 16 | Halte- und Erfassungseinrichtung |
| 17 | Greifer |
| 18 | Führungsbahn |
| 19 | Antriebsmotor des Greifers |
| 20 | Verlegerichtung der Segmente |
| 21 | Leger-Klemmeinrichtung |
| 21a, b | Bewegungspfeil |
| 22 | Antriebsmotor der Leger-Klemmeinrichtung |
| 23 | Steuereinrichtung |
| 24 | Steuerleitung |
| 25 | Steuerleitung |
| 26 | Signalleitung |
| 27 | Vorsprünge |
| 28 | Segment |
| 29 | Scheibenspule |
| 30 | Doppelpfeil |
| 31 | Doppelpfeil |
| 32 | Spreizaggregat |
| 33 | Scheibenspulen |
| 34 | Messvorrichtung |
| 35 | Walzen/Umlenkstäbe |
| 36 | Verschieberichtung |
| 37 | Fasern |
| 38 | Bänder |
| 39 | Fadenführungselemente |
| 40 | Doppelpfeil |
| 41 | Messvorrichtung |
| 42 | Scheibenspule |
| L | Bewegungshub des Laufwagens |

## Patentansprüche

1. Verfahren zum Herstellen einer unidirektionalen Faserlage (1) in der Form einer endlosen Bahn, die sich auf einer mit konstanter Geschwindigkeit bewegten Transporteinrichtung befindet und sich in ihrer Längsrichtung zusammen mit der Transporteinrichtung bewegt, wobei die Fasern (11) in der Form einzelner Segmente (28) in einer definierten Position nebeneinander abgelegt werden und jedes Segment (28) aus mindestens einer Faser (11) besteht, die ihrerseits aus einer Vielzahl von Filamenten besteht, und wobei die Segmente (28) und Fasern (11) zueinander parallel, aber unter einem Winkel zu der Längsrichtung der entstehenden Faserlage (1) erlaufen,
**dadurch gekennzeichnet,**
**dass** die Breite jedes Segments (28) gemessen wird und nach Maßgabe der gemessenen Breite eine Verlegegeschwindigkeit bestimmt wird, mit der das Segment (28) in der entstehenden Faserlage (1) in der angestrebten definierten Position zu dem jeweils vorher abgelegten Segment (28) abgelegt wird.

2. Verfahren nach Anspruch 1, **dadurch gekennzeichnet, dass** die Faser (11, 37) zu einem Band (12, 38) gespreizt wird und zumindest ein Band (12, 38) ein jeweiliges Segment (28) bildet.

3. Verfahren nach Anspruch 1 oder 2, **dadurch gekennzeichnet, dass** mehrere Bänder (12, 38) gassenfrei zu einem jeweiligen Segment (28) und/oder die jeweiligen Segmente (28) gassenfrei in der unidirektionalen Faserlage (1) aneinandergelegt werden.

4. Verfahren nach Anspruch 3, **dadurch gekennzeichnet, dass** die Fasern (37) jeweils auf eine im Wesentlichen konstante Breite gespreizt werden und das Spreizen der einzelnen Fasern (37) bewirkende Spreizeinrichtungen (32) in Spreizrichtung bezüglich ihrer Lage zueinander so variiert werden, dass die fertig gespreizten Bänder (38) nach Beendigung des Spreizvorganges zu einem gassenfreien Segment (28) zusammengeführt werden.

5. Verfahren nach einem der Ansprüche 1 bis 4, **dadurch gekennzeichnet, dass** die Bänder überlappend zueinander zu einem Segment und/oder die Segmente überlappend zueinander in der Faserlage abgelegt werden.

6. Verfahren nach Anspruch 1 oder 2, **dadurch gekennzeichnet, dass** die Bänder zueinander und/oder die Segmente zueinander mit entsprechenden Abständen zueinander abgelegt werden.

7. Verfahren nach einem der Ansprüche 1 bis 6, **dadurch gekennzeichnet, dass** die Breite des Bandes (12, 38) oder des Segmentes (28) ständig gemessen wird.

8. Verfahren nach einem der Ansprüche 1 bis 7, **dadurch gekennzeichnet, dass** den Bändern (12, 38) oder den Segmenten (28) zum Ablegen eine Bewegungskomponente relativ zur Transportrichtung zur Kompensation ihrer Breitenvariation aufgeprägt wird.

9. Verfahren nach einem der Ansprüche 2 bis 8, **dadurch gekennzeichnet, dass** mehrere Fasern (11, 37) in getrennten oder gemeinsamen Spreizaggregaten (10, 32) im Wesentlichen gleichzeitig zu Bändern (12, 38) gespreizt werden.

10. Verfahren nach einem der Ansprüche 1 bis 9, **dadurch gekennzeichnet, dass** die Breiten der Bänder (12, 38) oder der Segmente (28) gezielt auf ein definiertes Flächengewicht eingestellt werden.

11. Verfahren nach einem der Ansprüche 2 bis 10, **dadurch gekennzeichnet, dass** auf den Fasern (11, 37) vorhandene Schlichte insbesondere thermisch oder chemisch aufgebrochen wird.

12. Verfahren nach Anspruch 11, **dadurch gekennzeichnet, dass** die Schlichte vor, während oder nach dem Spreizen aufgebrochen wird.

13. Verfahren nach einem der Ansprüche 1 bis 12, **dadurch gekennzeichnet, dass** den einzelnen Bändern (12, 38) oder den einzelnen Segmenten (28) oder der unidirektionalen Faserlage (1) Querkohäsion, insbesondere durch ein chemisches Bindemittel oder durch mechanische oder durch hydraulische Behandlung, verliehen wird.

14. Verfahren nach einem der Ansprüche 2 bis 4, **dadurch gekennzeichnet, dass** die Bänder (12, 38) auf eine Sollbreite zur Erzielung einer gassenfreien Lage oder einer zumindest bereichsweise gestuften überlappenden Lage und/oder einer Lage mit definiertem Flächengewicht geregelt werden.

15. Verfahren nach Anspruch 14, **dadurch gekennzeichnet, dass** die Breite der Bänder (12, 38) unmittelbar nach Verlassen des Spreizaggregates (10, 32) oder während des Spreizweges gemessen und die Bänder (12, 38) einer Regeleinrichtung zur Regelung der Sollbreite zugeführt wird.

16. Verfahren nach einem der Ansprüche 1 bis 15, **dadurch gekennzeichnet, dass** die Fasern (11, 37) aus Kohlenstoff, Keramik, Glas, Aramid, Mischungen davon oder aus deren Vor- und/oder Zwischenprodukten bestehen.

17. Vorrichtung zum Erstellen einer unidirektionalen Faserlage (1) aus gleichgerichteten, zu Bändern (38) verbreiterten Fasern (37), die in Längsrichtung der Faserlage (1) verlaufen, mit je einer Vorratsspule für jede Faser, mit je einer Fadenführungseinrichtung (39) für jede Faser (37) und mit einer Spreizstation (32), wobei die Fasern (37) parallel im Abstand zueinander von den Vorratsspulen kommend die Fadenführungseinrichtungen (39) und die Spreizstation (32) durchlaufen und danach als verbreiterte Bänder (38) in einer definierten Position zueinander zur Bildung der unidirektionalen Faserlage zusammengeführt werden, **dadurch gekennzeichnet, dass** hinter der Spreizstation eine Messstation (41) angeordnet ist, in der die Breite jedes Bandes (38) gemessen wird, und dass eine Einrichtung zum Steuern der Fadenführungseinrichtungen (39) vorgesehen ist, durch die die Bänder (38) nach Maßgabe ihrer gemessenen Breite in der angestrebten definierten Position nebeneinander angeordnet werden.

18. Vorrichtung nach Anspruch 17, **dadurch gekennzeichnet, dass** jede Fadenführungseinrichtung (39) in der Spreizrichtung verstellbar angeordnet ist.

19. Vorrichtung nach Anspruch 17 oder 18, **dadurch gekennzeichnet, dass** die Spreizstation (32) mit einer Einrichtung zum Einstellen des Spreizgrades der Fasern (37) versehen ist.

20. Vorrichtung nach Anspruch 19, **dadurch gekennzeichnet, dass** die Einrichtung zum Einstellen des Spreizgrades aus einem Vibrationsstab, aus seitlich in die Spreizstation einschiebbaren zusätzlichen Walzen (35), aus einer Abbremseinrichtung der Vorratsspulen zum gezielten Spannungsaufbau, aus einer Heizeinrichtung oder einer Einrichtung zum Variieren des Umschlingungswinkels der Bänder um die Spreizwalzen besteht.

21. Vorrichtung nach einem der Ansprüche 17 bis 20, **dadurch gekennzeichnet, dass** eine Heizeinrichtung vorgesehen ist, welche vor der Fadenführungseinrichtung angeordnet ist oder eine solche Länge aufweist, dass eine Beheizung der gespreizten Faser vor, während und nach der Spreizeinrichtung erfolgt.

## Claims

1. Method for producing a unidirectional fibrous layer (1) in the shape of an endless sheet, which is located on a transport device moving at a constant speed and which moves in its longitudinal direction together with the transport device, the fibres (11) in the shape of individual segments (28) being placed beside one another in a defined position and each segment (28) consisting of at least one fibre (11) which for its part consists of a multiplicity of filaments, and the segments (28) and fibres (11) running parallel to one another but at an angle to the longitudinal direction of the fibrous layer (1) under formation,
**characterized**
**in that** the width of every segment (28) is measured and a displacement speed is defined on the basis of the measured width, the segment (28) in the fibrous layer (1) under formation being placed at said displacement speed in the targeted defined position in relation to the respective segment (28) previously placed.

2. Method according to Claim 1, **characterized in that** the fibre (11, 37) is spread to form a tape (12, 38) and at least one tape (12, 38) forms a respective segment (28).

3. Method according to Claim 1 or 2, **characterized in that** multiple tapes (12, 38) are laid against one another in a gap-free manner to form a respective segment (28) and/or the respective segments (28) are laid against one another in a gap-free manner in the unidirectional fibrous layer (1).

4. Method according to Claim 3, **characterized in that** the fibres (37) are each spread to a substantially constant width and spreading devices (32) which effect the spreading of the individual fibres (37) are varied in the direction of spreading with reference to their relative position to one another such that the fully spread tapes (38) are brought together after completion of the spreading process to form a gap-free segment (28).

5. Method according to one of Claims 1 to 4, **characterized in that** the tapes are placed in a mutually overlapping manner to form a segment and/or the segments are placed in a mutually overlapping manner in the fibrous layer.

6. Method according to Claim 1 or 2, **characterized in that** the tapes in relation to one another and/or the segments in relation to one another are placed at corresponding distances from one another.

7. Method according to one of Claims 1 to 6, **characterized in that** the width of the tape (12, 38) or of the segment (28) is constantly measured.

8. Method according to one of Claims 1 to 7, **characterized in that** a motion component relative to the direction of transport is imparted on the tapes (12, 38) or the segments (28) during placing in order to compensate for their variation in width.

9. Method according to one of Claims 2 to 8, **characterized in that** multiple fibres (11, 37) are substantially simultaneously spread to form tapes (12, 38) in separate or common spreading units (10, 32).

10. Method according to one of Claims 1 to 9, **characterized in that** the widths of the tapes (12, 38) or of the segments (28) are specifically set to a defined basis weight.

11. Method according to one of Claims 2 to 10, **characterized in that** any sizing present on the fibres (11, 37) is broken down, in particular thermally or chemically.

12. Method according to Claim 11, **characterized in that** the sizing is broken down prior to, during or after the spreading.

13. Method according to one of Claims 1 to 12, **characterized in that** transverse cohesion is imparted to the individual tapes (12, 38) or the individual segments (28) or the unidirectional fibrous layer (1), in particular by means of a chemical binding agent or by mechanical or by hydraulic treatment.

14. Method according to one of Claims 2 to 4, **characterized in that** the tapes (12, 38) are adjusted to a nominal width for the purpose of achieving a gap-free layer or an at least regionally tiered overlapping layer and/or a layer with defined basis weight.

15. Method according to Claim 14, **characterized in that** the width of the tapes (12, 38) is measured immediately after exiting the spreading unit (10, 32) or when in the spreading path, and the tapes (12, 38) are fed to an adjustment device for the adjustment of the nominal width.

16. Method according to one of Claims 1 to 15, **characterized in that** the fibres (11, 37) consist of carbon, ceramic, glass, aramid, blends thereof, or of their primary or intermediate products.

17. Apparatus for producing a unidirectional fibrous layer (1) consisting of uniformly aligned fibres (37) which are widened to form tapes (38) extending in the longitudinal direction of the fibrous layer (1), having a supply spool for each fibre, having a thread guide device (39) for each fibre (37) and having a spreading station (32), the fibres (37), which originate in parallel at a distance from one another from the supply spools, passing through the thread guide devices (39) and the spreading station (32), and then being brought together as widened tapes (38) in a defined position relative to one another for the formation of the unidirectional fibrous layer, **characterized in that** a measuring station (41) is located behind the spreading station, in which measuring station the width of every tape (38) is measured, and **in that** a device for controlling the thread guide devices (39) is provided, by means of which the tapes (38) are arranged beside one another in the targeted defined position based on their measured width.

18. Apparatus according to Claim 17, **characterized in that** every thread guide device (39) is arranged to be adjustable in the direction of spreading.

19. Apparatus according to Claim 17 or 18, **characterized in that** the spreading station (32) is provided with a device for adjusting the degree of spreading of the fibres (37).

20. Apparatus according to Claim 19, **characterized in that** the device for adjusting the degree of spreading consists of a vibrating rod, of additional rollers (35) which are laterally insertable into the spreading station, of a breaking device for the supply spools to build up a specific tension, of a heating device or a device for varying the wrap angle of the tapes around the spreading rollers.

21. Apparatus according to one of Claims 17 to 20, **characterized in that** a heating device is provided, which is located ahead of the thread guide device and has a length such that heating of the spread-out fibre is carried out ahead of, within and following the spreading device.

## Revendications

1. Procédé de fabrication d'une couche de fibre unidirectionnelle (1) sous la forme d'une bande sans fin, qui se trouve sur un dispositif de transport se déplaçant avec une vitesse constante et qui se déplace dans sa direction longitudinale de concert avec le dispositif de transport, dans lequel les fibres (11) sont déposées sous la forme de segments individuels (28) dans une position définie les unes à côté des autres et chaque segment (28) se compose d'au moins une fibre (11), qui se compose à son tour d'une multiplicité de filaments, et dans lequel les segments (28) et les fibres (11) s'étendent parallèlement les uns aux autres mais sous un angle par rapport à la direction longitudinale de la couche de fibre naissante (1), **caractérisé en ce que** l'on mesure la largeur de chaque segment (28) et, selon la largeur mesurée, on détermine la vitesse de pose avec laquelle le segment (28) est déposé dans la couche de fibre naissante (1) dans la position définie visée par rapport au segment précédent (28) respectivement déposé.

2. Procédé selon la revendication 1, **caractérisé en ce que** l'on écarte la fibre (11, 37) en une bande (12, 38) et au moins une bande (12, 38) forme un segment respectif (28).

3. Procédé selon la revendication 1 ou 2, **caractérisé en ce que** l'on dépose l'une contre l'autre plusieurs bandes (12, 38) sans gaz en un segment respectif (28) et/ou les segments respectifs (28) sans gaz dans la couche de fibre unidirectionnelle (1).

4. Procédé selon la revendication 3, **caractérisé en ce que** l'on écarte les fibres (37) respectivement sur une largeur essentiellement constante et on fait varier la position de dispositifs d'écartement (32), provoquant l'écartement des fibres individuelles (37), l'un par rapport à l'autre dans la direction d'écartement, de telle manière que les bandes écartées terminées (38) soient réunies en un segment sans gaz (28) après la fin de l'opération d'écartement.

5. Procédé selon l'une quelconque des revendications 1 à 4, **caractérisé en ce que** l'on dépose les bandes en recouvrement l'une par rapport à l'autre en un segment et/ou les segments en recouvrement l'un par rapport à l'autre dans la couche de fibre.

6. Procédé selon la revendication 1 ou 2, **caractérisé en ce que** l'on dépose les bandes l'une par rapport à l'autre et/ou les segments l'un par rapport à l'autre avec des distances correspondantes l'un/l'une par rapport à l'autre.

7. Procédé selon l'une quelconque des revendications 1 à 6, **caractérisé en ce que** l'on mesure en permanence la largeur de la bande (12, 38) ou du segment (28).

8. Procédé selon l'une quelconque des revendications 1 à 7, **caractérisé en ce que** l'on imprime aux bandes (12, 38) ou aux segments (28) à déposer une composante de mouvement par rapport à la direction de transport afin de compenser leur variation de largeur.

9. Procédé selon l'une quelconque des revendications 2 à 8, **caractérisé en ce que** l'on écarte plusieurs fibres (11, 37) dans des ensembles d'écartement séparés ou communs (10, 32) essentiellement en même temps en bandes (12, 38).

10. Procédé selon l'une quelconque des revendications 1 à 9, **caractérisé en ce que** l'on règle les largeurs des bandes (12, 38) ou des segments (28) de façon ciblée à un grammage défini.

11. Procédé selon l'une quelconque des revendications 2 à 10, **caractérisé en ce que** l'on brise, en particulier par voie thermique ou chimique, l'enduit présent sur les fibres (11, 37).

12. Procédé selon la revendication 11, **caractérisé en ce que** l'on brise l'enduit avant, pendant ou après l'écartement.

13. Procédé selon l'une quelconque des revendications 1 à 12, **caractérisé en ce que** l'on confère aux bandes individuelles (12, 38) ou aux segments individuels (28) ou à la couche de fibre unidirectionnelle (1) une cohésion transversale, en particulier au moyen d'un liant chimique ou par un traitement mécanique ou un traitement hydraulique.

14. Procédé selon l'une quelconque des revendications 2 à 4, **caractérisé en ce que** l'on régule les bandes (12, 38) à une largeur de consigne pour produire une couche sans gaz ou une couche au moins localement en recouvrement étagé et/ou une couche avec un grammage défini.

15. Procédé selon la revendication 14, **caractérisé en ce que** l'on mesure la largeur des bandes (12, 38) immédiatement après la sortie de l'ensemble d'écartement (10, 32) ou pendant la course d'écartement et on envoie les bandes (12, 38) à un dispositif de régulation pour réguler la largeur de consigne.

16. Procédé selon l'une quelconque des revendications 1 à 15, **caractérisé en ce que** les fibres (11, 37) se composent de carbone, céramique, verre, aramide, de mélanges de ceux-ci ou de leurs produits primaires et/ou intermédiaires.

17. Dispositif de fabrication d'une couche de fibre unidirectionnelle (1) à partir de fibres (37) de même orientation élargies en bandes (38), qui s'étendent dans la direction longitudinale de la couche de fibre (1), avec chaque fois une bobine de réserve pour chaque fibre, avec chaque fois un dispositif de guidage de fibre (39) pour chaque fibre (37) et avec une station d'écartement (32), dans lequel les fibres (37), venant parallèlement à distance l'une de l'autre à partir des bobines de réserve, traversent les dispositifs de guidage de fibre (39) et la station d'écartement (32) et sont ensuite réunies, sous forme de bandes élargies (38), dans une position définie les unes par rapport aux autres pour la formation de la couche de fibre unidirectionnelle, **caractérisé en ce qu'**une station de mesure (41), dans laquelle on mesure la largeur de chaque bande (38), est disposée en aval de la station d'écartement, et **en ce qu'**il est prévu un dispositif pour commander les dispositifs de guidage de fibre (39), par lequel les bandes (38) sont disposées les unes à côté des autres dans la position définie visée selon leur largeur mesurée.

18. Dispositif selon la revendication 17, **caractérisé en ce que** chaque dispositif de guidage de fibre (39) est disposé de façon réglable dans la direction d'écartement.

19. Dispositif selon la revendication 17 ou 18, **caractérisé en ce que** la station d'écartement (32) est munie d'un dispositif pour régler le degré d'écartement des fibres (37).

20. Dispositif selon la revendication 19, **caractérisé en ce que** le dispositif pour régler le degré d'écartement se compose d'une barre vibrante, de rouleaux supplémentaires (35) pouvant être insérés latéralement dans la station d'écartement, d'un dispositif de freinage des bobines de réserve pour l'instauration d'une contrainte ciblée, d'un dispositif de chauffage ou d'un dispositif pour faire varier l'angle de contact des bandes autour des rouleaux d'écartement.

21. Dispositif selon l'une quelconque des revendications 17 à 20, **caractérisé en ce qu'**il est prévu un dispositif de chauffage, qui est disposé en amont du dispositif de guidage de fibre ou qui présente une longueur telle qu'un chauffage des fibres écartées soit effectué avant, pendant et après le dispositif d'écartement.
